# EUROPÄISCHE PATENTANMELDUNG

(11) **EP 0 835 023 A2**
(43) Veröffentlichungstag der Anmeldung: **08.04.1998**
(21) Anmeldenummer: 97116315.9
(22) Anmeldetag: 19.09.1997
(51) Int. Cl.: H04N 1/40

(54) **Verfahren und Vorrichtung zur Auswertung von Bildmaterial**

(30) Priorität: 04.10.1996 DE 19641003
(71) Anmelder: VITRONIC Dr.-Ing. Stein Bildverarbeitungs GmbH, 65189 Wiesbaden (DE)
(72) Erfinder: Kog-Oberthür, Reinhard, Dr.Ing., D-65527 Niedernhausen (DE); Hoffmann, Burghard, Ing., D-65232 Taunusstein (DE); Stein, Norbert, Dr.Ing., D-65193 Wiesbaden (DE)
(74) Vertreter: Weber, Dieter, Dr.

(57) **Zusammenfassung**

Die vorliegende Erfindung betrifft ein Verfahren und eine Vorrichtung zur Auswertung von Bildmaterial, insbesondere der Einzelbilder von Negativfilmen, wobei ein Bild von einer Videokamera erfaßt und digitalisiert wird, und wobei Informationen mindestens aus Teilbereichen des Bildes ausgewertet werden. Die entsprechende Vorrichtung weist eine Videokamera, eine Beleuchtungseinrichtung (3) für die Bilder und eine digitale Erfassungseinrichtung (14) mit Speicher und Auswerteeinheit auf. Um ein Verfahren und eine Vorrichtung mit den vorstehenden Merkmalen zu schaffen, welche eine schnellere und vereinfachte Auswertung von Bildern erlauben, wird erfindungsgemäß hinsichtliich des Verfahrens vorgeschlagen, daß als Videokamera eine hochauflösende Zeilenkamera (2) verwendet wird, wobei gegebenenfalls Ausschnittvergrößerungen (21) aus den digitalisierten Bilddaten des Gesamtbildes erzeugt werden. Hinsichtlich der Vorrichtung wird vorgeschlagen, daß die Videokamera eine hochauflösende Zeilenkamera (2) ist und daß Einrichtungen zur digitalen Vergrößerung der gespeicherten Bilddaten vorgesehen sind.

## Beschreibung

Die vorliegende Erfindung betrifft ein Verfahren und eine Vorrichtung zur Auswertung von Bildmaterial, insbesondere der Einzelbilder von Negativfilmen, wobei ein Bild von einer Videokamera erfaßt und digitalisiert wird, und wobei Informationen mindestens aus Teilbereichen des Bildes ausgewertet werden.

Die entsprechende Vorrichtung weist daher eine Videokamera, eine Beleuchtungseinrichtung für das Bild und eine Speichereinrichtung für die digitalen Daten sowie im allgemeinen auch eine Wiedergabeeinrichtung, wie zum Beispiel einen Bildschirm, auf.

Ein Beispiel für ein entsprechendes Verfahren und eine entsprechende Vorrichtung liefern Verfahren und Vorrichtungen zur Auswertung von Verkehrsüberwachungsfilmen, welche im allgemeinen die Negativbilder von Fahrzeugen enthalten, die bei Überschreitung vorgeschriebener Höchstgeschwindigkeiten oder beim Überfahren roter Ampeln von einer Aufnahmekamera erfaßt wurden. Dabei werden im allgemeinen gleichzeitig in einen Bereich des Filmes bestimmte Daten mit eingeblendet, wie zum Beispiel die Uhrzeit und Datum, die gemessene Geschwindigkeit des Fahrzeuges, gegebenenfalls die zwischen dem Umschalten einer Ampel auf rot und dem Moment der Bildaufnahme vergangene Zeit, der Ort der Bildaufnahme, etc. Üblicherweise werden zwecks Auswertung derartige Bilder mit einer herkömmlichen Matrixkamera erfaßt, digitalisiert und auf einem Bildschirm dargestellt. Ein Benutzer, welcher diese Bilder auswertet, versucht auf diesem Videobild das Kennzeichen des Fahrzeuges zu erkennen, um dieses über eine Tastatur einzugeben und um den Fahrzeuginhaber über das Kennzeichen zu identifizieren. Gleichzeitig versucht der Benutzer auch festzustellen, ob gegebenenfalls das Gesicht der das Fahrzeug steuernden Person identifizierbar ist. In der Regel müssen für diese Auswertung die Bereiche des Kennzeichens und auch des Fahrergesichtes vergrößert dargestellt werden. Da jedoch hierfür die digitalisierten Daten des insgesamt erfaßten Bildes nicht ausreichen, steuert der Benutzer eine Zoomoptik der Videokamera auf die interessierenden Bildbereiche und stellt dann erneut ein Videobild des durch die Zoomoptik vergrößerten Bereiches auf dem Bildschirm dar, um die genannten Bereiche in verbesserter Auflösung zu erfassen und visuell erkennen zu können. Die von dem Benutzer erkannten Bildinformationen, wie zum Beispiel das Kennzeichen des Fahrzeuges, werden dann über eine Tastatur in das System eingegeben.

Die vorliegende Erfindung wird im folgenden in erster Linie mit Blick auf solche Filme aus der Verkehrsüberwachung beschrieben, auch wenn es für Fachleute offensichtlich ist, daß die Erfindung einen wesentlich breiteren Anwendungsbereich hat und ebenso gut auf Diapositivfilme, Fotopositive oder sonstige Bilder angewandt werden könnte, wobei lediglich eine Beleuchtungseinrichtung in geeigneter Weise anzupassen und auszurichten wäre.

Ein anderer Anwendungsbereich wäre zum Beispiel die Vermessungstechnik und insbesondere die Photogrammetrie, bei welcher bestimmte Bilddetails hinsichtlich ihrer relativen Position zueinander und/oder zu anderen Bildern möglichst genau erfaßt werden müssen.

Die bekannten Verfahren und Vorrichtungen erfordern relativ viel Zeit für die Bildauswertung. Insbesondere müssen zunächst die interessierenden, die gewünschten Informationen bzw. Bildinhalte aufweisenden Bildbereiche von der Optik der Kamera angesteuert und vergrößert erfaßt werden. Das zunächst vollständige Erfassen des Bildes, das Ausrichten der Videokamera auf einen bestimmten Bereich und schließlich das Vergrößern mit Hilfe der Zoomoptik mit anschließender Darstellung des vergrößerten Bereiches und dem Herauslesen und Übernehmen der Informationen aus diesem Bereich erfordert notwendigerweise eine erhebliche Zeit, so daß zum Beispiel im Falle der Auswertung der erwähnten Verkehrsüberwachungsfilme mindestens 30 bis 50 Sekunden benötigt werden, um die Informationen aus dem Bild zu übernehmen und in Form von codierten Daten zusätzlich zu dem Bild bzw. Bildausschnitten abzuspeichern.

Gegenüber diesem Stand der Technik liegt der vorliegenden Erfindung die Aufgabe zugrunde, ein Verfahren und eine Vorrichtung mit den eingangs genannten Merkmalen zu schaffen, welche eine schnellere und vereinfachte Auswertung von Bildern erlauben.

Hinsichtlich des Verfahrens wird die der Erfindung zugrunde liegende Aufgabe dadurch gelöst, daß als Videokamera eine hochauflösende Zeilenkamera verwendet wird, wobei gegebenenfalls Ausschnitte oder Auschnittvergrößerungen unmittelbar aus den digitalisierten Bilddaten der Zeilenkamera erzeugt werden.

Mit anderen Worten, statt Erzeugen einer optischen Vergrößerung mit entsprechender Ausrichtung einer Kameraoptik und dem Einstellen eines Zooms, wird auf die sehr hohe Auflösung der Zeilenkamera zurückgegriffen, die das gesamte Bild mit sehr hoher Auflösung erfaßt, so daß für die Darstellung von Ausschnitten oder Ausschnittvergrößerungen lediglich der Teil der ohnehin schon erfaßten Bilddaten in dem gewünschten Maßstab auf eine Anzeigeeinrichtung, wie zum Beispiel einem Bildschirm, dargestellt werden kann.

Die Kamera kann dabei sowohl eine schwarz/weiß Kamera als auch eine Farbkamera sein.

Dabei können jedoch die durch vorgegebene Kriterien definierbaren Bildbereiche, die für die Auswertung von besonderem Interesse sind, mit einer an den jeweiligen Bereich angepaßten Beleuchtung nochmals von der Zeilenkamera aufgenommen werden, um die mit der angepaßten Beleuchtung erzeugten Bilddaten für den betreffenden Bereich getrennt darzustellen. Während die Auflösung in Zeilenrichtung der Zeilenkamera in allen Darstellungen unverändert ist, kann senkrecht zu der Zeilenrichtung die Auflösung beliebig variiert werden, indem entweder die Transportgeschwindigkeit des Filmes bzw. Bildes an der Zeilenkamera vorbei reduziert wird oder indem die Zeilenwiederholfrequenz der Zeilenkamera vergrößert wird (wenn die Belichtung dies zuläßt). Es versteht sich, daß die Darstellung des Gesamtbildes und der Bildausschnitte der jeweiligen Auflösung senkrecht zur Zeilenrichtung angepaßt werden muß, um das Bild und die Bildbereiche unverzerrt darzustellen. Durch die Änderung der Aufnahme- bzw Zeilenwiederholfrequenz, gegebenenfalls auch bei gleichzeitiger Änderung der Abtastgeschwindigkeit (= Relativgeschwindigkeit zwischen Kamera und Film) kann jedoch vor allem die Belichtung bzw. die Belichtungszeit der einzelnen Bildbereiche bzw Aufnahmen variiert werden, ohne daß gleichzeitig die Auflösung quer zur Zeilenrichtung verändert wird. Dies ist gegenüber einer Verbesserung der Auflösung senkrecht zur Zeilenrichtung im allgemeinen der wichtigere Aspekt einer oder mehrerer erneuter Aufnahmen.

Mit Hilfe der vorgebbaren Kriterien kann ein entsprechendes System die interessierenden Bereiche automatisch heraussuchen und mit in Transportrichtung des Bildes oder Filmes entsprechend vergrößerter Auflösung erfassen, wobei jedoch ohne weiteres auch das ganze Bild mit der vergrößerten Auflösung nochmals erfaßt werden kann, die Beleuchtung jedoch den Erfordernissen angepaßt ist, die sich aus den Abbildungsverhältnissen in den interessierenden Bereichen ergeben.

Um wieder zu dem Beispiel des Verkehrsüberwachungsfilmes zurückzukehren, so ist auf diesen Negativfilmen das Kennzeichen häufig ein relativ dunkler, schwarzer Fleck, insbesondere wenn es sich um ein reflektierendes Kennzeichen handelt, welches also tatsächlich als positives Bild ein sehr heller Fleck wäre. Der Bereich des Fahrerkopfes liegt oberhalb des Kennzeichens und ist typischerweise ebenfalls ein relativ dunkler Bereich auf einem Negativfilm.

Demzufolge muß zur besseren Darstellung dieser Bereiche der Film stärker beleuchtet werden, wobei im Falle von Negativfilmen zweckmäßigerweise eine Durchleuchtungstechnik angewendet wird, also der Film zwischen einer Beleuchtungseinrichtung und der Zeilenkamera transportiert wird, die Beleuchtungseinrichtung bzw. Lampe also der Zeilenkamera gegenüberliegend angeordnet ist. Je nach Darstellungstechnik kann das Anzeigegerät bzw. der Bildschirm aus den von der Zeilenkamera erfaßten Bilddaten wahlweise eine Positiv- oder Negativdarstellung erzeugen, wobei Positivdarstellungen zu bevorzugen sind, weil sie von einem menschlichen Benutzer besser erkannt werden.

Die Erfindung hat den Vorteil, daß das Heraussuchen interessierender Bereiche und die vergrößerte Darstellung derselben erheblich schneller erfolgen kann als bei herkömmlichen Matrixkameras, bei denen nach dem Heraussuchen und der Erkennung eines interessierenden Bereiches erst die Optik ausgerichtet und die Vergrößerung und die Blende entsprechend eingestellt werden müssen. Da jedoch erfindungsgemäß durch Verwendung der hochauflösenden Zeilenkamera, mit einer entsprechend angepaßten Auflösung senkrecht zur Zeilenrichtung, die digitalen Bilddaten bereits vollständig in der für eine Vergrößerung erforderlichen Auflösung vorliegen, kann der interessierende Bereich zum Beispiel durch Mausklick identifiziert und in Sekundenbruchteilen vergrößert dargestellt werden. Bei der vergrößerten Darstellung der interessierenden Bereiche kann dann gegebenenfalls auf die mit der speziell für die betreffenden Bereiche angepaßten Beleuchtung erzeugten Bilddaten zurückgegriffen werden. Die Ausschnittvergrößerungen werden vorzugsweise in getrennten Bildfenstern auf einem Bildschirm oder dergleichen dargestellt.

Besonders bevorzugt ist eine Ausgestaltung des erfindungsgemäßen Verfahrens, bei welcher ein Capstan-Antrieb für den Antrieb eines Filmes verwendet wird, auf welchem sich die zu untersuchenden Bilder befinden, wobei außerdem vorzugsweise der Antrieb sowohl im Vorwärtslauf als auch im Rückwärtslauf mit kontrollierbarer Geschwindigkeit gesteuert werden soll. Aufgrund dieser Merkmale kann man die Bilddaten in sehr zeitsparender Weise erfassen, indem zum Beispiel ein erstes Übersichtsbild mit, senkrecht zur Zeilenrichtung, geringerer Auflösung oder mit kürzerer Belichtungszeit erzeugt wird, und der Film mit Hilfe des Capstan-Antriebes entsprechend schnell an der Zeilenkamera vorbeibewegt wird. Eine Auswerteeinrichtung erfaßt dabei zum Beispiel die interessierenden Bereiche und stellt deren Schwärzungsgrad fest, woraufhin der Film beim Rücklauf langsamer transportiert und dabei mit einer angepaßten Lichtstärke durchleuchtet wird, die eine bessere Belichtung der interessierenden Bereiche gewährleistet. Je nachdem, wie die Beleuchtung anzupassen ist, werden dann die übrigen, nicht interessierenden Bereiche entweder überbelichtet oder unterbelichtet, was jedoch unerheblich ist, da diese Daten nicht weiter verwendet werden. Durch automatische Anpassung der Digitalisierungsfrequenz an die momentane Transportgeschwindigkeit, wird trotz unterschiedlicher Belichtungszeit und Transportgeschwindigkeit ein unverzerrtes Bild in Zeilenrichtung und senkrecht dazu erreicht. Bei Bedarf kann auch ein weiterer Vorlauf des Filmes nochmals langsam mit einer erneut für einen anderen Bereich angepaßten Beleuchtung gescannt werden. Auf diese Weise hat man das Bild insgesamt dreifach erfaßt, einmal als Übersichtsbild mit normaler Beleuchtung und zweimal mit nur auf bestimmte Bereiche angepaßter Beleuchtung (wahlweise auch in verbesserter Auflösung). Aus diesen Daten mit verbesserter Belichtung kann dann das System die interessierenden Bereiche, an welche es die Beleuchtung angepaßt hat, automatisch in entsprechenden Bildfenstern und bei Bedarf vergrößert darstellen. Falls dies jedoch nicht die tatsächlich interessierenden Bereiche sind, kann auf dem Übersichtsbild per Mausklick oder auch durch Eingabe von Koordinaten ein anderer, interessierender Bereich ausgewählt werden, der dann stattdessen vergrößert dargestellt wird, wobei auf jeden der vorhanden drei Datensätze der Bilder zurückgegriffen werden kann.

Diese Bildbearbeitung erfolgt jedoch im allgemeinen erst, nachdem ein entsprechendes System bereits sämtliche drei Datensätze (bei Bedarf auch mehr oder weniger Datensätze) erzeugt hat und die Bearbeitung und Auswertung am Bildschirm nur noch anhand dieser digitalisierten Datensätze erfolgt, ohne daß irgendwelche Einstellungen der Kamera vorgenommen werden müssen. Vielmehr kann während der Auswertung der gespeicherten Bilddaten das System bereits ein weiteres Bild einscannen und wiederum ein, zwei oder mehr Datensätze des Bildes mit unterschiedlichen Beleuchtungs- bzw. Belichtungsverhältnissen erzeugen. Der Benutzer hat dann im allgemeinen beim Aufrufen eines neuen Bildes sofort das Übersichtsbild und in Fenstern die interessierenden Bildausschnitte vorliegen und kann hieraus unmittelbar die gewünschten Informationen entnehmen und über eine Tastatur in ein Rechnersystem bzw. dessen Speicher eingeben. Die ausgewählten, vergrößerten Bereiche werden, falls sie korrekt ausgewählt wurden, einfach bestätigt. Nur für den Fall, daß das System einmal einen interessierenden Bereich nicht automatisch vergrößert dargestellt hat, wird per Mausklick der interessierende Bereich auf dem Übersichtsbild angewählt und kann dann aus den vorhandenen Datensätzen ebenfalls in Bruchteilen von Sekunden vergrößert dargestellt werden. Dabei kann der Benutzer nach Bedarf zwischen den verschiedenen Datensätzen desselben Bildes wählen, wenn sich die Vergrößerung als über- oder unterbelichtet erweist. Auch hier kann jedoch das System den Benutzer bereits insoweit unterstützen, als es bei dem Auswählen eines Bereiches zur Vergrößerung dessen Kontrast ermittelt und die Vergrößerung sofort aus dem Datensatz zeigt, bei dessen Erzeugung die für eine optimale Abbildung dieses Bereiches günstigste Beleuchtung vorlag. All diese Vorgänge laufen erheblich schneller ab als das Heraussuchen und Vergrößern bestimmter Filmbereiche mit optisch-mechanischen Mitteln, zumal es in einem solchen Fall auch nicht möglich ist, bereits das nächste Bild digital zu erfassen, solange noch an der Herstellung einer Vergrößerung gearbeitet wird.

Hinsichtlich der eingangs genannten Vorrichtung wird die der Erfindung zugrunde liegende Aufgabe dadurch gelöst, daß als Videokamera eine Zeilenkamera hoher Auflösung vorgesehen ist. Die sich daraus ergebenden Vorteile sind bereits in Verbindung mit der Erläuterung des erfindungsgemäßen Verfahrens beschrieben worden. In der bevorzugten Ausführungsform ist die Vorrichtung für die Auswertung von Negativfilmen augelegt, hat also eine Beleuchtungseinrichtung, die der Zeilenkamera gegenüberliegend angeordnet ist, sowie eine Transportvorrichtung, welche den Film zwischen Zeilenkamera und Beleuchtungseinrichtung hindurchtransportiert, so daß der Film von der Zeilenkamera in Durchleuchtung erfaßt wird. Als Antrieb ist ein Capstan-Antrieb vorgesehen, der sowohl vorwärts als auch rückwärts mit kontrollierter Geschwindigkeit antreibbar ist.

Die Beleuchtungseinrichtung ist steuerbar, so daß der Film unterschiedlich stark durchleuchtet werden kann, wobei in dem Fall, daß besonders stark geschwärzte Bereiche des Negativfilmes die interessierenden Bereiche sind, die Beleuchtung entsprechend stark gewählt wird, so daß genügend Licht durch die geschwärzten Bereich hindurchdringt und von der Zeilenkamera erfaßt wird, damit Details in den Strukturen dieses stärker geschwärzten Bereiches entsprechend deutlicher erkennbar werden. Umgekehr verhält es sich selbstverständlich, wenn die interessierenden Bereiche sehr helle Bereiche des Filmes sind. Denkbar ist jedoch auch, daß statt der stärkeren Beleuchtung oder zusätzlich zu dieser eine steuerbare Objektivblende verwendet wird.

Die Verwendung eines Capstan-Antriebes für den Filmtransport ist an sich ungewöhnlich, da bei herkömmlichen Filmtransportsystemen üblicherweise die Randperforation von Filmen für den positionsgenauen Antrieb genutzt wird. Bei Verwendung einer Zeilenkamera zum Scannen des Bildes kommt es jedoch im wesentlichen nur auf eine konstante Transportgeschwindigkeit des Filmes an, wenn keine Verzerrungen des aus den digitalisierten Daten zusammengesetzten Bildes entstehen sollen. Hierfür ist der Capstan-Antrieb gut geeignet, selbst wenn möglicherweise ein gewisser Schlupf des Filmes auftreten kann, solange dieser Schlupf nur relativ gleichmäßig ist. Zudem kann der Schlupf in vielen praktischen Fällen aus konstanten Bildmerkmalen automatisch berechnet und kompensiert werden.

Übliche Capstan-Antriebe werden üblicherweise allerdings nicht im Vorwärts- und Rückwärtslauf und mit variabler Geschwindigkeit betrieben. Soweit Capstan-Antriebe bisher für Magnetbänder verwendet werden, werden im Falle eines Vorwärts- und Rückwärtsbetriebes zwei Capstan-Antriebe verwendet, von denen der eine für den Vortrieb in der einen und der andere für den Vortrieb in der anderen Richtung sorgt. Im Gegensatz zu der erfindungsgemäßen Vorrichtung wird außerdem die mit Magnetbändern erzielbare Auflösung (sei es von Bild- oder Audiodaten) durch Verringerung der Geschwindigkeit schlechter, während im vorliegenden Fall die Auflösung der Zeilenkamera durch Verringerung der Transportgeschwindigkeit verbessert wird oder unverändert bleibt.

Wie bereits erwähnt, läßt sich eine Vielzahl der vorstehend beschriebenen Merkmale auch auf andere Bilder als die Negativfilme von Verkehrsüberwachungssystemen anwenden und die entsprechende Änderung und Anpassung von Transporteinrichtungen und die geänderte Anordnung der Beleuchtungseinrichtung, gegebenenfalls aufderselben Seite wie die Zeilenkamera bezüglich des Bildes, kann von Fachleuten ohne weiteres vorgenommen werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figur.

Die einzige Figur zeigt schematisch ein Filmauswertungssystem für Negativfilme, insbesondere für Negativfilme aus Verkehrsüberwachungskameras.

Im einzelnen besteht die erfindungsgemäße Vorrichtung aus verschiedenen Baugruppen, wie zum Beispiel einem Filmlesegerät 12, einem Elektronenrechner 14 mit integriertem Speicher und einer entsprechenden Software, einem Bildschirm 6 und einer Tastatur 7.

Das Filmlesegerät hat als Hauptelemente eine Zeilenkamera 2, eine Beleuchtungseinrichtung 3 und einen Capstan-Antrieb, welcher aus der Capstan-Welle 4 und der Andruckrolle 5 besteht. Weiterhin sind noch zwei Spulen 10, 11 für das Auf- bzw. Abwickeln eines Negativfilmes 1, sowie Umlenkrollen 8, 9 für den Negativfilm 1 vorgesehen, die zusammen mit dem Capstan-Antrieb 4, 5 den Film 1 durch die Fokusebene der Optik der Zeilenkamera 2 hindurchführen. Gegebenenfalls kann jedoch auch auf eine Linsenoptik zugunsten einer Spezialoptik für Zeilenkameras bei der Kamera 2 verzichtet werden, wenn der Film in definiertem Abstand an einem Öffnungsspalt der Zeilenkamera 2 vorbeigeführt wird und im übrigen sichergestellt wird, daß Licht im wesentlichen nur direkt von der Beleuchtungseinrichtung 3 durch den Film in die Zeilenkamera 2 eintreten und auf deren Zeilensensor auftreffen kann. Es versteht sich, daß gegebenenfalls die Zeilenkamera auch eine Verschlußblende aufweist, die in schneller Folge öffnet und schließt, so daß in entsprechender Folge jeweils neue Zeilen von Bilddaten aufgenommen werden können. In der bevorzugten Ausführungsform wird eine Zeilenkamera mit 5000 bis 7000 Bildpunkten verwendet.

Diese Bilddaten werden über eine Leitung 13 in einen Rechner 14 übertragen und in diesem zwischengespeichert. Mit Hilfe einer geeigneten Software wird eine automatische Vorauswertung vorgenommen, sobald ein vollständiges Bild des Negativfilmes 1 oder interessierender Bereiche gescannt worden ist. Diese Auswerteeinrichtung erkennt, ob bestimmte Bereiche des Bildes vorgegebenen Kriterien entsprechend, ob also zum Beispiel die Bereiche einen bestimmten Schwärzungsgrad aufweisen, einen bestimmten Kontrast zur Umgebung oder aber eine vorgegebene Form und Größe haben, die durch einen Helligkeitzkontrast zur jeweiligen Umgebung definiert wird.

Der Capstan-Antrieb kehrt dann die Bewegungsrichtung des Filmes 1 um und erfaßt das soeben eingescannte Bild erneut, wobei jedoch die Beleuchtungseinrichtung 3 den Film nunmehr mit einer geänderten Beleuchtungsstärke durchleuchtet, die den automatisch erfaßten, interessierenden Bereichen entspricht. Wenn also die interessierenden Bereiche stark geschwärzt sind, wird entsprechend stärker beleuchtet. Dabei kann auch die Zeilenwiederholfrequenz der Kamera abgesenkt werden, um bei gleichbleibender Auflösung eine stärkere Lichtausbeute zu bekommen.

Die so erfaßten Bilddaten werden in einem Pufferspeicher bzw. Zwischenspeicher abgelegt. Über die Tastatur 7 werden sie von dort abgerufen und auf dem Bildschirm 6 dargestellt. Auf dem Bildschirm 6 wird dann zum Beispiel ein Übersichtsbild 25 des gesamten Negatives bzw. die positive Umkehrung dieses Negatives dargestellt. In einer oberen Bildleiste werden dabei in Feldern 22 - die auch in anderer Weise als dargestellt angeordnet und ausgestaltet sein können - zusätzliche Informationen eingeblendet, wie zum Beispiel Ort, Zeit, Datum und die gemessene Geschwindigkeit des fotografierten Fahrzeuges, einschließlich der dort zulässigen Höchstgeschwindigkeit.

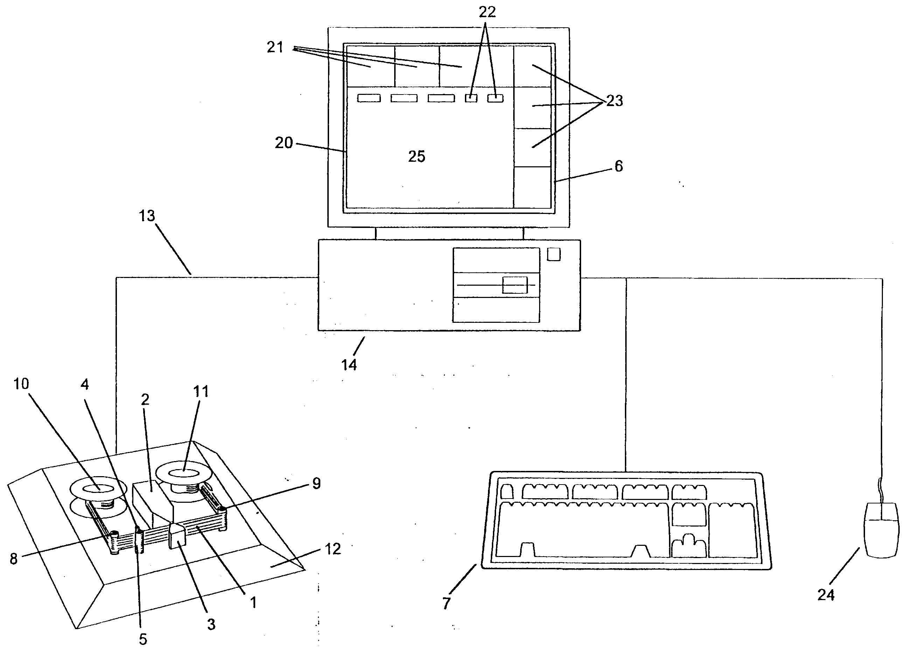

Gleichzeitig werden auch die interessierenden Bereiche, die von einem entsprechenden Auswertesystem automtatisch erfaßt wurden, vergrößert in den oberen Bildfenstern 21 dargestellt. Am rechten Rand des Bildschirmes 6 gibt es nochmals eine vertikale Bildleiste 23, in welcher in bestimmten Feldern Informationen angezeigt werden, die, soweit das Auswerteprogramm dazu in der Lage ist, auch bereits aus den Vergrößerungen in den Bildausschnitten 21 enthaltenen Informationen Übernommen sind. Im übrigen kann über die Tastatur 7 in die Datenfelder 23 eine entsprechende Information über das Bild in codierter Form eingegeben werden, zum Beispiel das in einem der Fenster 21 erkennbare Kennzeichen eines Fahrzeuges. Das entsprechende Auswerteprogramm kann auch diese Informationen bereits in den Datenfenstern 23 anbieten, soweit es in der Lage ist, aus den Fenstern 21 entsprechende Informationen herauszulesen. Soweit diese Informationen zutreffen, braucht der Benutzer dies lediglich noch über die Tastatur 7 oder die Maus 24 zu bestätigen. Ansonsten werden über die Tastatur 7 die aus dem Bild 25 bzw. den Ausschnitten 21 entnehmbaren Informationen an den entsprechenden Positionen in den Feldern 23 eingegeben. Die eingeblendeten Zusatzinformationen in den Feldern 22 werden ebenfalls ausgelesen und können unmittelbar in die Felder 23 übernommen werden.

Während ein Benutzer das Bild 25 und die Teilbilder 21 betrachtet, um zu entscheiden, welche Informationen in die Datenfelder 23 übernommen werden, kann der Filmscanner 12 bereits einen neuen Lesevorgang für ein weiteres Bild auf dem Negativfilm 1 durchführen und die dabei erzeugten Bilder im Pufferspeicher des Rechners 14 ablegen. Da das vorherige Bild bereits mit der vollen Auflösung der Zeilenkamera 2 aufgenommen wurde, ebenso wie auch die anschließenden Bilder mit geänderter Beleuchtungsstärke zur Darstellung der Interessierenden Bereiche, braucht die Kamera 2 nicht mehr vor dem betreffenden Bild des Filmes 1 verharren, der Negativfilm 1 kann also weiter transportiert werden, um ein neues Bild aufzunehmen, während das vorherige Bild noch auf dem Bildschirm betrachtet und ausgewertet wird. Sobald die in den Datenfeldern 23 einzugebenden Informationen mit den aus dem Bild 25 und den Teilbildern 21 selbst zu entnehmenden Informationen übereinstimmen, kann der Benutzer diese Datenfelder 23 mit dem betreffenden Bild gemeinsam abspeichern und ruft ein neues Bild aus dem Pufferspeicher des Rechners 14 ab. Wegen des erheblich kürzeren Aufbaus der Teilbilder 21 aus den vorhandenen, digitalen Daten, im Vergleich zum optischen Ansteuern und Vergrößern von Filmausschnitten über eine Videokamera 2, erfolgt zum einen die Auswertung selbst wesentlich schneller und zum anderen steht nach einer Auswertung unmittelbar das nächste Bild mit allen Teilbildern bereits zur Verfügung. Die Gesamtzeit, die erforderlich ist, um das Übersichtsbild 25 und zwei oder drei Teilbilder 21 zu erzeugen, beträgt üblicherweise weniger als 10 Sekunden, so daß ein Benutzer theoretisch alle 10 Sekunden ein neues Bild auswerten könnte, falls diese Auswertung und die Übernahme der Daten aus den Bildfenstern 21 und den Feldern 22 in die Datenfenster 23 nicht mehr als 10 Sekunden erfordert Gegenüber herkömmlichen Bildauswertesystemen ist dies ein Zeitgewinn um mindestens einen Faktor 3.

Wie bereits erwähnt, kann das erfindungsgemäße System auch auf andere Arten von Bildmaterial angewendet werden und ist nicht auf Negativfilme beschränkt. Auch einzelne Fotos könnten in entsprechender Weise ausgewertet werden, wobei selbstverständlich die Transporteinrichtungen und die Anordnung der Beleuchtungseinrichtung 3 entsprechend anzupassen wäre.

## Patentansprüche

1. Verfahren zur Auswertung von Bildmaterial, insbesondere der Einzelbilder von Negativfilmen, wobei ein Bild von einer Videokamera erfaßt und digitalisiert wird, und wobei Informationen aus Teilbereichen des Bildes ausgewertet werden, **dadurch gekennzeichnet, daß** als Videokamera eine hochauflösende Zeilenkamera (2) verwendet wird, wobei gegebenenfalls Ausschnittvergrößerungen (21) aus den digitalisierten Bilddaten des Gesamtbildes erzeugt werden.

2. Verfahren nach Anspruch 1, dadurch gekennzeichnet, daß durch vorgegebene Kriterien definierbare Bildbereiche mit einer an den jeweiligen Bereich angepaßten Beleuchtung erneut mit der Zeilenkamera (2) aufgenommen werden, um den interessierenden Bildbereich getrennt darzustellen.

3. Verfahren nach Anspruch 2, dadurch gekennzeichnet, daß die durch die Zeilenabstände gegebene Auflösung bei der Aufnahme der definierten Bildbereiche erhöht wird, indem die Transportgeschwindigkeit des Filmes vermindert und/oder die Aufnahmefrequenz der Zeilenkamera (2) erhöht wird.

4. Verfahren nach Anspruch 2 oder 3, dadurch gekennzeichnet, daß die durch die Zeilenfrequenz begrenzte Belichtungszeit bei der Aufnahme der definierten Bildbereiche erhöht wird, indem die Transportgeschwindigkeit des Filmes vermindert und/oder die Aufnahmefrequenz der Zeilenkamera (2) gleich bleibt oder vermindert wird.

5. Verfahren nach einem der Ansprüche 1 bis 4, dadurch gekennzeichnet, daß ein Negativfilm (1) ausgewertet wird, indem die Zeilenkamera (2) das durch den Negativfilm (1) hindurchtretende Licht einer gegenüber der Videokamera (2) angeordneten Beleuchtungseinrichtung (3) erfaßt.

6. Verfahren nach einem der Ansprüche 1 bis 5, dadurch gekennzeichnet, daß ein Capstan-Antrieb für den Filmtransport verwendet wird.

7. Verfahren nach Anspruch 5 oder 6, dadurch gekennzeichnet, daß der Filmtransport mit kontrolliert variabler Geschwindigkeit erfolgt.

8. Verfahren nach Anspruch 7, dadurch gekennzeichnet, daß Bilddaten sowohl beim Vorals auch beim Rücklauf des Filmes von der Zeilenkamera (2) erfaßt werden.

9. Verfahren nach einem der Ansprüche 1 bis 8, dadurch gekennzeichnet, daß die Helligkeit einer Beleuchtungseinrichtung und/oder die Belichtungszeit der aufzunehmenden Bilder gezielt variierbar ist.

10. Verfahren nach einem der Ansprüche 1 bis 9, dadurch gekennzeichnet, daß ein Negativfilm einer Verkehrsüberwachungskamera ausgewertet wird, wobei die auszuwertenden, definierten Bildbereiche die Bereich des Fahrzeugkennzeichens und des hinter der Windschutzscheibe erkennbaren Fahrergesichtes sind.

11. Verfahren nach einem der Ansprüche 1 bis 10, dadurch gekennzeichnet, daß die interessierenden Teilbereiche automatisch erfaßt und in vergrößerter Darstellung direkt aus den digitalisierten Daten getrennt wiedergegeben werden.

12. Vorrichtung zur Auswertung von Bildmaterial, insbesondere der Einzelbilder von Negativfilmen, mit einer Videokamera, einer Beleuchtungseinrichtung (3) für die Bilder und einer digitalen Erfassungseinrichtung (14) mit Speicher und Auswerteeinheit, **daduch gekennzeichnet, daß** die Videokamera eine hochauflösende Zeilenkamera (2) ist und daß Einrichtungen zur digitalen Vergrößerung der gespeicherten Bilddaten vorgesehen sind.

13. Vorrichtung nach Anspruch 12, dadurch gekennzeichnet, daß die Vorrichtung für die Auswertung von Negativfilmen (1) ausgelegt ist und eine Transporteinrichtung (4, 5) aufweist, welche den Negativfilm (1) zwischen einer Beleuchtungseinrichtung (3) und der Zeilenkamera (2) hindurchführt.

14. Vorrichtung nach Anspruch 13, dadurch gekennzeichnet, daß als Transportvorrichtung ein Capstan-Antrieb (4,5) vorgesehen ist.

15. Vorrichtung nach einem der Ansprüche 13 oder 14, dadurch gekennzeichnet, daß die Geschwindigkeit der Transportvorrichtung kontrolliert steuerbar ist.

16. Vorrichtung nach einem der Ansprüche 13 bis 15, dadurch gekennzeichnet, daß die Transportvorrichtung im Vor- und Rücklauf betreibbar ist.

17. Vorrichtung nach einem der Ansprüche 12 bis 16, dadurch gekennzeichnet, daß die Helligkeit der Beleuchtungseinrichtung, vorzugsweise rechnergesteuert, variierbar ist.

18. Vorrichtung nach einem der Ansprüche 11 bis 17, dadurch gekennzeichnet, daß die Beleuchtungseinrichtung (3) eine über die Zeilenlänge hinweg im wesentlichen konstante Beleuchtungsstärke aufweist.

19. Vorrichtung nach einem der Ansprüche 12 bis 18, dadurch gekennzeichnet, daß sie einen Bildschirm sowie einen Pufferspeicher aufweist, so daß während der Darstellung eines Bildes auf dem Bildschirm (6) bereits ein weiteres Bild digitalisiert und aufgezeichnet werden kann.

20. Vorrichtung nach einem der Ansprüche 12 bis 19, dadurch gekennzeichnet, daß sie eine automatische Auswerteeinrichtung aufweist, welche mindestens einen Teil der Bilddaten in auf einem Bildschirm (6) darstellbare Informationsdaten umwandelt.

21. Vorrichtung nach einem der Ansprüche 12 bis 20, dadurch gekennzeichnet, daß sie für die Zeilenkamera (2) eine Belichtungseinrichtung mit variabel einstellbarer Belichtungszeit aufweist.
